# EUROPEAN PATENT APPLICATION

(11) **EP 4 679 384 A1**
(43) Date of publication of application: **14.01.2026**
(21) Application number: 24187031.0
(22) Date of filing: 08.07.2024
(51) Int. Cl.: G06V 20/40, G06V 40/20

(54) **IMPROVED METHOD FOR A SEMI-AUTOMATIC JUDGEMENT OF A PHOTO-FINISH IMAGE**

(71) Applicant: Swiss Timing Ltd, 2606 Corgémont (CH)
(72) Inventor: WENGER, Lucas, 2735 Champoz (CH); DE ALMEIDA, Tiago, 1588 Cudrefin (CH); AUBERT, Romain, 2800 Delémont (CH); RICHARD, Pascal, 2606 Corgémont (CH)
(74) Representative: ICB SA

(57) **Abstract**

The invention concerns a method for semi-automatically judging a photo-finish image (100) in order to define at least one judging line (D) corresponding to an object or an athlete to be judged, the method being implemented by at least one photo-finish camera provided with an image sensor having a matrix of pixels, said method comprising some steps of manually defining a reference point (A) in the vicinity of the object or part of the athlete to be judged, analyzing columns (B) of pixels contained in an analysis zone (40) defined between the reference point (A) and the object or athlete to be judged, and referencing said column (B) as a judgement line (D) when a variation in the light intensity received by at least one pixel of one of the columns of pixels (B) contained in the analysis zone (40) is detected.

## Description

### Field of the invention

The invention relates to a method for semi-automatic judging of a photo-finish image to define on the image at least one judging line corresponding to an object or an athlete to be judged.

The invention relates more particularly to a method for semi-automatically judging a photo-finish image, implemented by an image processing system comprising at least one photo-finish image-taking camera comprising an image sensor provided with a matrix of pixels, also called linescan sensor, the image sensor being configured to detect the variations in light intensity received by the pixels of the matrix, and an image-processing unit.

The semi-automatic judging method according to the invention is intended in particular, but not exclusively, for use in any type of sports competition.

### Background of the invention

The technique of photo finish images is known to be used in sports competitions to judge the order of finish of athletes.

A photo finish image is currently judged manually by an operator. The operator places a vertical line on the image corresponding to the first pixel of the object/athlete to be judged and then enters the number sign recorded on the image to identify the athlete. However, these operations, and in particular the placement of the vertical line, are time-consuming and can be particularly long, tedious and difficult in certain sports, such as road cycling, where the judging has to be carried out on a peloton. This problem is compounded by the fact that the positioning of the cursors depends entirely on the judgement and precision of the operator. The positioning of the cursors is a critical activity because it determines the ranking of the athletes. It cannot therefore be excluded that, despite all the care taken by the operator, judgments may be made on the basis of inaccurate or imprecise cursor positioning.

The invention aims to remedy these problems by proposing a system for automatically judging an image of the photo-finish type, which makes it possible to quickly and accurately obtain all the data (position or posture of the object or athletes to be judged) and thus to quickly make an accurate and precise judgement of the arrival of the athletes.

### Summary of the invention

To this end, the invention proposes a method for semi-automatically judging a photo-finish image to define on the photo-finish image at least one judging line corresponding to an object or an athlete to be judged, the method being implemented by an image processing system comprising at least one photo-finish camera provided with an image sensor having a matrix of pixels, the image sensor being adapted to detect variations in the intensity of light received by the pixels of the matrix, and an image processing unit, the method being characterized in that it comprises the steps of manually defining a reference point in the vicinity of the object or part of the athlete to be judged, analyzing columns of pixels contained in an analysis zone defined between the reference point and the object or athlete to be judged and, when a variation in the light intensity received by at least one pixel of one of the columns of pixels contained in the analysis zone is detected, referencing said column as a judgement line.

Thanks to the analysis of the photo-finish image based on the variation in light intensity, the vertical line corresponding to the judging line is automatically and precisely placed on the first pixel of the object/athlete to be judged. This simplifies the operator's task, as he only needs to place a reference point "approximately" in front of the object/athlete to be judged. An accurate judgement can therefore be made more quickly.

Advantageously, the step of analyzing the columns of pixels is carried out sequentially, pixel column by pixel column, starting from the reference point and along the horizontal time axis, until a variation in light intensity is detected in one of the columns of pixels.

Advantageously, the analysis zone is defined by increasing heights of the pixel columns.

Advantageously, the analysis zone is defined between two lines extending on either side of the horizontal time axis from the reference point.

Advantageously, the two lines delimiting the analysis zone are set so as to define an angular separation of 90 degrees.

Advantageously, the reference point is set opposite the object or part of the athlete to be evaluated.

Advantageously, the reference point chosen is located in front of the front wheel of the bicycle to be judged when the sporting discipline is road cycling.

### Brief description of the drawings

The present invention will be described subsequently in more detail with reference to the attached drawing, given by way of examples, but in no way limited thereto, in which:
- Figure 1 is a synoptic diagram of a judgement process according to the invention in the context of an example of implementation;
- Figure 2 shows the processing system implementing the judgement process shown in Figure 1;
- Figure 3 shows a schematic view of a photo-finish image listing the data used to produce the judgement according to the method.

### Detailed description of the invention

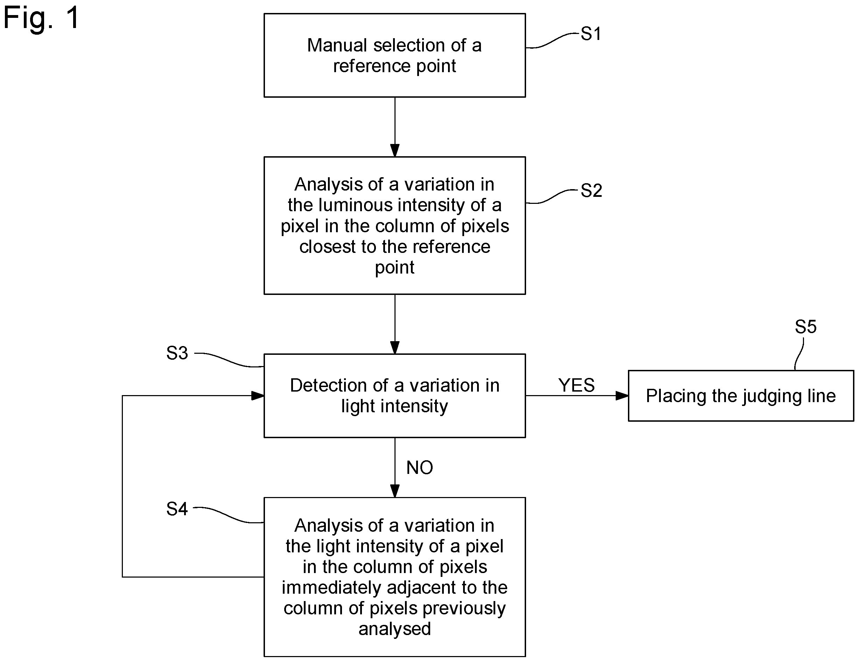

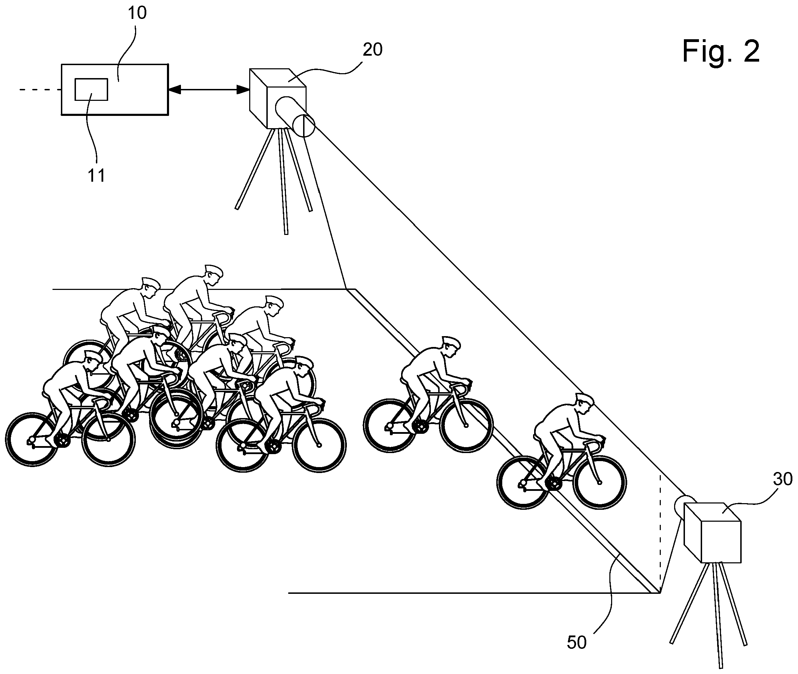

With reference to Figures 1 and 2, an example of the implementation of the semi-automatic judging method of a photo finish image 100 according to the invention in the context of a road cycling race and the associated processing system implemented is described.

The judging method according to the invention is intended to define on a photo finish image at least one judging line corresponding to an object or an athlete to be judged.

In the example described, the judging method is implemented in the context of a road cycling race.

The associated processing system comprises an image capture device and an image processing unit 10. The photo-finish image acquisition device advantageously comprises two photo-finish image acquisition cameras 20, 30 arranged on either side of and aligned with a judging line, in this case a finish line 50.

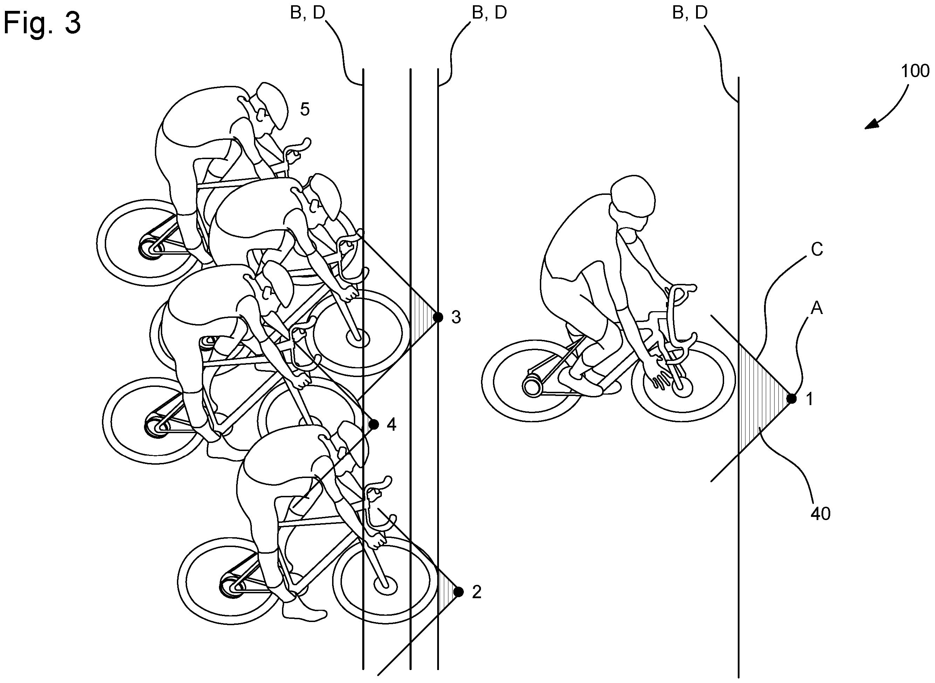

Each of the cameras 20, 30 comprises an image sensor provided with a matrix of pixels, the image sensor being configured to detect the variations in light intensity received by the pixels of the matrix. The photo-finish image obtained by the imaging device is then transmitted to the processing unit 10 for semi-automatic placement of the vertical lines corresponding to the judging lines of the object/athlete to be judged, according to the process described below. An example of the photo-finish image 100 obtained is shown in Figure 3.

The judging method according to the invention comprises a first step (step S1) consisting in defining a reference point A in the vicinity of the object or part of the athlete to be judged (in the example, in the vicinity of the front wheel of the bicycle) by positioning a cursor on the photo-finish image 100.

This step of defining the reference point A is carried out manually by an operator. In the example shown in the figure, the reference points A selected on the photo-finish image 100 (Figure 3) are in front of and close to the front wheel of the bicycles to be judged (reference points 1 to 5). Obviously, the reference point A to be defined will vary according to the sport and the type of competition. For example, the reference points may be defined in relation to the rear of the rear wheel in the elimination race in track cycling, in relation to the torso in athletics, in relation to the first part of the body or the snowboard in snowboard cross, etc.

Once the reference point A has been defined for each athlete, the processing unit carries out a search to identify the first pixel of the object/athlete to be judged by means of a dedicated analysis module 11 (steps S2 to S5). In the example shown, the first pixel to be identified corresponds to the front wheel of the bicycle.

The second step of the method consists of an automatic search operation for the first pixel in a defined zone of the pixel matrix. This zone is hereinafter referred to as the "analysis zone" 40 (or "search zone").

The analysis zone 40 is defined so as to extend between the reference point A and the object/athlete to be judged, said zone widening as the object/athlete to be judged is approached. According to a preferred embodiment, the analysis zone 40 is defined between the course of two lines C extending on either side of the horizontal time axis from the reference point A. Advantageously, the lines, called boundary lines C, have an angular separation of at least 45 degrees and preferably 90 degrees, as in the example shown in Figure 3. The boundary lines C are advantageously drawn symmetrically with respect to the horizontal time axis.

The search is carried out sequentially, column B of pixels by column B of pixels, starting from the reference point A and following the horizontal time axis, until a variation in light intensity is detected in one of the columns B of pixels. In the example shown, with the horizontal time axis pointing to the left, the analysis is carried out from right to left, starting from the column B of pixels closest to the reference point, "moving up" the columns B in the direction of the object/athlete.

For each column B of pixels, the pixels are analyzed over the height of the column bounded by the boundary lines C. Thus, for each analyzed column B, the light intensity received by each of the pixels in column B and any variations therein are analyzed.

If no variation in light intensity is detected in the analyzed column B, the analysis module 11 moves on to analyze the immediately adjacent column B of pixels (in the example, the column to the left of the column just analyzed) (step S4).

If a variation in the intensity received by a pixel in a column B is detected, the analysis is stopped while the column B containing the pixel in question is referenced as judgement line D (step S5).

Once the judgement line D has been identified and displayed on the photo finish image 100, the next step is for the operator to identify the athlete in order to validate the judgement. Identification can be carried out by reading the athlete's bib number on the photo finish image 100, from the view of a video camera providing a different angle of view, or from an identification system such as a transponder if the athlete is equipped with one.

The same procedure is followed for each of cyclists 2 to 4. For cyclist 5, whose front wheel is hidden, the same procedure is applied to a photo-finish image taken with the photo-finish camera placed on the other side of the track. Of course, the process does not require the use of two photo-finish cameras, and a single photo-finish camera may be used without departing from the scope of the invention.

In the example described, the selection of the reference point and the implementation of the method have been described in relation to the criteria of the sport concerned, namely road cycling. It is of course understood that the method must be adapted according to the sport, the type of competition and/or the part to be judged with the part to be judged.

## Claims

1. Method for semi-automatically judging a photo-finish image (100) to define on the photo-finish image at least one judging line (D) corresponding to an object or an athlete to be judged, the method being implemented by an image processing system comprising at least one photo-finish camera provided with an image sensor having a matrix of pixels, the image sensor being adapted to detect variations in the intensity of light received by the pixels of the matrix, and an image processing unit, **characterized in that** it comprises the following steps:
- manually defining a reference point (A) in the vicinity of the object or part of the athlete to be judged,
- analyzing columns (B) of pixels contained in an analysis zone (40) defined between the reference point (A) and the object or athlete to be judged, and
- when a variation in the light intensity received by at least one pixel of one of the columns of pixels (B) contained in the analysis zone (40) is detected, referencing said column (B) as a judgement line (D).

2. Method for semi-automatically judging a photo-finish image (100) according to claim 1, **characterized in that** the step of analyzing the columns of pixels (B) is carried out sequentially, pixel column by pixel column, starting from the reference point (A) and along the horizontal time axis, until a variation in light intensity is detected in one of the columns of pixels (B).

3. Method for semi-automatically judging a photo-finish image (100) according to claim 1 or claim 2, **characterized in that** the analysis zone (40) is defined by increasing heights of the pixel columns (B).

4. Method for semi-automatically judging a photo-finish image (100) according to any of the preceding claims, **characterized in that** the analysis zone (40) is defined between two lines extending on either side of the horizontal time axis from the reference point (A).

5. Method for semi-automatically judging a photo-finish image (100) according to claim 4, **characterized in that** the two lines delimiting the analysis zone (40) are set so as to define an angular separation of 90 degrees.

6. Method for semi-automatically judging a photo-finish image (100) according to any of the preceding claims, **characterized in that** the reference point (A) is set opposite the object or part of the athlete to be evaluated.

7. Method for semi-automatically judging a photo-finish image (100) according to any of the preceding claims, **characterized in that**, when the sporting discipline is road cycling, the reference point (A) chosen is located in front of the front wheel of the bicycle to be judged.
